# DEMANDE DE BREVET EUROPEEN

(11) **EP 3 680 963 A1**
(43) Date de publication de la demande: **15.07.2020**
(21) Numéro de dépôt: 20150197.0
(22) Date de dépôt: 03.01.2020
(51) Int. Cl.: H01M 4/13, H01M 4/133, H01M 4/134, H01M 4/1393, H01M 4/1395

(54) **ELECTRODES NEGATIVES UTILISABLES DANS DES ACCUMULATEURS FONCTIONNANT SELON LE PRINCIPE D'INSERTION ET DESINSERTION IONIQUE OU DE FORMATION D ALLIAGE ET ACCUMULATEUR COMPRENANT UNE TELLE ELECTRODE**

(30) Priorité: 08.01.2019 FR 1900167
(71) Demandeur: Commissariat à l'énergie atomique et aux énergies alternatives, 75015 Paris (FR)
(72) Inventeur: GUTEL, Elise, 38054 GRENOBLE CEDEX 09 (FR); BLANC, Lionel, 38054 GRENOBLE CEDEX 09 (FR); PORCHER, Willy, 38054 GRENOBLE CEDEX 09 (FR); REYNIER, Yvan, 38054 GRENOBLE CEDEX 09 (FR)
(74) Mandataire: Brevalex

(57) **Abrégé**

L'invention a trait à une électrode négative pour accumulateur fonctionnant selon le principe d'insertion et désinsertion ionique et/ou selon le principe de formation d'un alliage et de désalliage, ladite électrode négative comprenant :
-une première couche (3) comprenant un matériau actif déposé, *via* une de ses faces, sur une première face d'un collecteur de courant (5) ;
-une deuxième couche (7) comprenant un matériau actif déposé, *via* une de ses faces, sur une deuxième face d'un collecteur de courant (5), ladite première face étant opposée à ladite deuxième face ;
caractérisée en ce que le collecteur de courant (5) est muni de trous traversants (6) reliant la première couche à la deuxième couche et en ce que la première couche est revêtue d'une couche composée d'un métal (1), dont les cations correspondants sont ceux intervenant dans le processus d'insertion ou désinsertion ionique et/ou dans le processus de formation d'alliage et de désalliage dans le matériau actif de la première couche et de la deuxième couche.

## Description

### DOMAINE TECHNIQUE

La présente invention a trait à un nouveau type d'électrode négative destiné à être utilisé dans :
- des accumulateurs fonctionnant selon le principe d'insertion et désinsertion ionique dans le matériau actif de l'électrode (également désigné par le principe d'intercalation ou désintercalation ionique), des accumulateurs de ce type pouvant être des accumulateurs M¹-ion, avec M¹ correspondant à un élément alcalin (tel que Li, Na, K) ou des accumulateurs M²-ion, avec M² correspondant à un élément alcalino-terreux (tel que Ca, Mg) ; ou
- des accumulateurs fonctionnant selon le principe de formation d'un alliage ou de désalliage avec l'un au moins des matériaux actifs d'électrode.

Les accumulateurs de ce type ont pour vocation d'être utilisés comme source d'énergie autonome, en particulier, dans les équipements électroniques portables (tels que les téléphones mobiles, les ordinateurs portables, l'outillage), afin de remplacer progressivement les accumulateurs nickel-cadmium (NiCd) et nickel-hydrure métallique (NiMH). Ils peuvent également servir à fournir l'alimentation en énergie nécessaire aux nouvelles microapplications, telles que les cartes à puce, les capteurs ou autres systèmes électromécaniques ainsi que pour l'électromobilité.

Du point de vue de leur fonctionnement, les accumulateurs susmentionnés fonctionnent soit selon le principe d'insertion-désinsertion ionique dans les matériaux actifs ou soit selon le principe de formation d'un alliage ou de désalliage avec au moins l'un des matériaux actifs, tel que le lithium qui peut former un alliage avec l'étain.

En prenant pour exemple, les accumulateurs au lithium, lors de la décharge de l'accumulateur, l'électrode négative libère du lithium sous forme ionique Li⁺, qui migre à travers l'électrolyte conducteur ionique et vient s'incorporer dans le matériau actif de l'électrode positive pour former un matériau d'insertion ou un alliage. Le passage de chaque ion Li⁺ dans le circuit interne de l'accumulateur est exactement compensé par le passage d'un électron dans le circuit externe, générant ainsi un courant électrique.

En revanche, lors de la charge de l'accumulateur, les réactions se produisant au sein de l'accumulateur sont les réactions inverses de la décharge, à savoir que :
- l'électrode négative va incorporer du lithium dans le réseau du matériau la constituant, pour former un matériau d'insertion ou un alliage ; et
- l'électrode positive va libérer du lithium, lequel va s'incorporer dans le matériau de l'électrode négative pour former un matériau d'insertion ou un alliage.

Lors du premier cycle de charge de l'accumulateur, quand le matériau actif de l'électrode négative est porté à un potentiel d'insertion du lithium ou de formation d'un alliage de lithium, une partie du lithium va réagir avec l'électrolyte à la surface des grains de matériau actif de l'électrode négative pour former une couche de passivation à sa surface. La formation de cette couche de passivation consomme une quantité d'ions lithium non négligeable, ce qui se matérialise par une perte irréversible de capacité de l'accumulateur (cette perte étant qualifiée de capacité irréversible et pouvant être évaluée de l'ordre de 5 à 20% de la capacité totale initiale du système), du fait que les ions lithium ayant réagi ne sont plus disponibles pour les cycles ultérieurs de charge/décharge. D'autres réactions de surface peuvent également se produire avec consommation du lithium, comme la réduction de la couche d'oxyde située à la surface du matériau actif, notamment lorsque celui-ci est du silicium, pour former des composés du type Li₄SiO₄. Qui plus est, une partie des réactions d'insertion dans les matériaux d'insertion peuvent être irréversibles, ce qui consomme du lithium, qui ne sera plus disponible par la suite.

Il convient donc de minimiser ces pertes lors de la première charge ou à tout moins de la compenser, afin que la densité d'énergie de l'accumulateur soit la plus élevée possible.

Pour compenser ce phénomène, il peut être envisagé une source de lithium supplémentaire dans le matériau d'électrode négative, laquelle peut servir également de réserve d'ions pour compenser les pertes au cours de la durée de vie de l'accumulateur et ainsi l'améliorer.

Pour ce faire, il a été proposé des techniques d'introduction de lithium additionnel dans l'électrode négative pour pallier l'inconvénient susmentionné, parmi lesquelles il peut être cité les techniques *« in situ »* de prélithiation et les techniques « *ex situ »* de prélithiation.

Concernant les techniques dites « *in situ* », celles-ci consistent à introduire du lithium métallique (c'est-à-dire au degré d'oxydation « 0 ») dans l'électrode négative par exemple sous forme d'une poudre de lithium métallique stabilisée par une couche protectrice (comme décrit dans Electrochemistry Communications 13 (2011) 664-667) mélangée avec l'encre comprenant les ingrédients de l'électrode négative (à savoir, le matériau actif, les conducteurs électroniques et un liant organique), l'insertion de lithium se faisant de manière spontanée par un phénomène de corrosion, l'avantage de cette technique étant qu'elle peut s'intégrer directement dans le processus de fabrication des électrodes avec toutefois les inconvénients de ne pas pouvoir permettre l'utilisation des voies aqueuses pour la fabrication des électrodes, du fait de l'utilisation de lithium métallique et de laisser subsister des porosités résiduelles dans l'électrode, une fois le lithium consommé.

Concernant les techniques *« ex situ* », celles-ci consistent à prélithier électrochimiquement l'électrode négative, par exemple, par voie galvanostatique, en plaçant celle-ci dans un montage comportant un bain électrolytique et une contre-électrode comprenant du lithium, ces techniques permettant de contrôler la quantité de lithium introduite dans l'électrode négative mais présentant toutefois l'inconvénient de nécessiter la mise en place d'un montage expérimental lourd. En particulier, étant donné que l'électrode est très réactive à l'air ou à l'humidité, l'ensemble des étapes d'assemblage de l'accumulateur doit être réalisé sous atmosphère parfaitement inerte.

Au vu de l'état de l'art, il existe un véritable besoin pour des électrodes négatives pour accumulateur à insertion-désinsertion métallique ou à formation d'alliage présentant un taux de métallisation suffisamment important dans tout le volume des électrodes, afin de permettre de pallier les pertes de capacité irréversible et, qui plus est, présentant une surface suffisamment importante pour pouvoir être utilisées, notamment, dans des accumulateurs à architecture spiralée.

Les auteurs de la présente invention se sont fixé pour objectif de combler ce besoin au moyen d'électrodes négatives se caractérisant par un design spécifique.

### EXPOSE DE L'INVENTION

Ainsi, l'invention a trait à une électrode négative pour accumulateur fonctionnant selon le principe d'insertion et désinsertion ionique et/ou selon le principe de formation d'un alliage et de désalliage, ladite électrode négative comprenant :
- une première couche comprenant un matériau actif déposé, *via* une de ses faces, sur une première face d'un collecteur de courant ;
- une deuxième couche comprenant un matériau actif déposé, *via* une de ses faces, sur une deuxième face d'un collecteur de courant, ladite première face étant opposée à ladite deuxième face ;
caractérisée en ce que le collecteur de courant est muni de trous traversants reliant la première couche à la deuxième couche et en ce que la première couche est revêtue d'une couche composée d'un métal, dont les cations correspondants sont ceux intervenant dans le processus d'insertion ou désinsertion ionique et/ou dans le processus de formation d'alliage et de désalliage dans le matériau actif de la première couche et de la deuxième couche.

Par électrode négative, on entend, classiquement, dans ce qui précède et ce qui suit, l'électrode qui fait office d'anode, quand le générateur débite du courant (c'est-à-dire lorsqu'il est en processus de décharge) et qui fait office de cathode, lorsque le générateur est en processus de charge.

Par matériau actif, on entend, classiquement, dans ce qui précède et ce qui suit, lorsque l'accumulateur fonctionne selon le principe de l'insertion et désinsertion ionique, le matériau qui est directement impliqué dans les réactions réversibles d'insertion et de désinsertion des ions dans les matériaux actifs d'électrode lors des processus de charge et de décharge, en ce sens qu'il est apte à insérer et désinsérer des ions dans son réseau (plus spécifiquement, ici, les cations correspondants au métal constitutif de la couche composé d'un métal, ces ions pouvant être des ions alcalins, notamment des ions lithium, lorsque l'accumulateur est un accumulateur lithium-ion, des ions sodium, lorsque l'accumulateur est un accumulateur sodium-ion, des ions potassium, lorsque l'accumulateur est un accumulateur potassium-ion ou des ions alcalino-terreux, tels que des ions magnésium, lorsque l'accumulateur est un accumulateur magnésium-ion ou des ions calcium, lorsque l'accumulateur est un accumulateur calcium-ion).

Par matériau actif, on entend, classiquement, dans ce qui précède et ce qui suit, lorsque l'accumulateur fonctionne selon le principe de formation d'alliage et de désalliage, un matériau qui est impliqué dans les réactions d'alliage ou de désalliage lors des processus de charge et de décharge.

Par métal, on entend, dans ce qui précède et ce qui suit, l'élément métallique à son degré d'oxydation 0.

En proposant un tel design d'électrodes, les auteurs de la présente invention ont ainsi apporté une solution aux problèmes de perte de capacité irréversible pour des électrodes, par exemple, de grande surface, destinées notamment à une architecture spiralée d'accumulateur, en permettant une diffusion des cations issus de la couche composée d'un métal dans tout le volume de l'électrode. En effet, une fois les électrodes de l'invention mises en contact d'un électrolyte (à savoir, une fois qu'elles sont montées dans un accumulateur ou alors après mise en contact avec un électrolyte avant assemblage de l'électrode négative dans un accumulateur), la couche composée d'un métal va subir un phénomène de corrosion, dont ils résultent des cations (lesquels cations correspondent à ceux intervenant dans le processus d'insertion-désinsertion ou de formation d'alliage ou de désalliage des accumulateurs, dans lesquels elles sont destinées à être incorporées) qui vont pouvoir diffuser de la première couche vers la deuxième couche *via* les trous traversants pourvus au niveau du collecteur de courant.

Les électrodes se présentent, ainsi sous forme d'électrodes bicouches, les deux couches étant disposées de part et d'autre d'un collecteur de courant muni de trous traversants reliant les deux couches, chacune des deux couches comprenant un matériau actif et l'une des couches (en l'occurrence, la première couche) étant revêtue sur une de ses faces d'une couche composée d'un métal, dont les cations correspondants sont ceux intervenant dans le processus d'insertion ou désinsertion ionique et/ou dans le processus de formation d'alliage et de désalliage dans le matériau actif de la première couche et deuxième couche.

Les électrodes négatives de l'invention peuvent s'étendre en longueur selon une direction longitudinale d'électrode et, plus spécifiquement, adopter une forme de bande, de même que la première couche, la deuxième couche et la couche composée d'un métal.

Le matériau actif de la première couche est classiquement identique à celui de la deuxième couche.

Par ailleurs, le matériau actif de la première couche et le matériau actif de la deuxième couche n'est, avantageusement, pas constitué du métal entrant dans la constitution de la couche composée de métal déposé.

Le matériau actif, que ce soit pour la première couche et/ou la deuxième couche, peut être, en particulier, un matériau apte à intercaler ou désintercaler des ions qui sont ceux issus du métal constitutif de la couche composée du métal et qui assurent le fonctionnement à l'accumulateur lorsque celui-ci fonctionne selon le principe d'insertion et désinsertion ionique. Le matériau actif peut être également un matériau apte à former, de manière réversible, un alliage avec le métal constitutif de la couche composée du métal, lorsque l'accumulateur fonctionne selon le principe de formation d'un alliage et de désalliage.

Plus spécifiquement, le matériau actif, que ce soit pour la première couche et/ou la deuxième couche, peut être, en particulier :
- un matériau apte à insérer ou désinsérer des ions alcalins, lorsque l'accumulateur est un accumulateur M¹-ion avec M¹ représentant un ion alcalin (tel que des ions lithium, lorsque l'accumulateur est un accumulateur lithium-ion ; des ions sodium, lorsque l'accumulateur est un accumulateur sodium-ion ; des ions potassium, lorsque l'accumulateur est un accumulateur potassium-ion) et que la couche composée d'un métal est une couche composée d'un métal alcalin ;
- un matériau apte à insérer ou désinsérer des ions alcalino-terreux, lorsque l'accumulateur est un accumulateur M²-ion avec M² représentant un ion alcalino-terreux (tel que des ions magnésium, lorsque l'accumulateur est un accumulateur magnésium-ion ; des ions calcium, lorsque l'accumulateur est un accumulateur calcium-ion) et que le couche composée d'un métal est une couche composée d'un métal alcalino-terreux.

En particulier, le matériau actif, que ce soit pour la première couche et/ou la deuxième couche, peut être choisi parmi :
- le silicium ;
- un matériau carboné, tel que du carbone dur (connu sous l'appellation anglo-saxonne « *hard carbon* »), du graphite naturel ou du graphite artificiel ; et
- des mélanges de ceux-ci ;
ces matériaux actifs étant adaptés pour les accumulateurs du type M¹-ion ou M²-ion mentionnés ci-dessus.

A titre d'exemple de matériau actif, il peut être cité, en particulier, un matériau composite silicium-graphite, lequel se compose, par exemple, d'un agrégat de particules de graphite et de particules de silicium.

Lorsque l'accumulateur fonctionne selon le principe de formation d'alliage et désalliage, le matériau actif, que soit pour la première couche et/ou la deuxième couche, peut être un matériau apte à former un alliage avec le métal constitutif de la couche composée du métal, ce matériau pouvant être, par exemple, de l'étain.

En outre, la première couche ainsi que la deuxième couche peuvent comprendre, outre un matériau actif, au moins un liant organique et au moins un matériau carboné conducteur électronique.

Le ou les liants organiques peuvent être choisis parmi les polymères vinyliques, tels que les polyfluorures de vinylidène (connus sous l'abréviation PVDF), les celluloses modifiées, telles que les carboxyméthylcelluloses (connues sous l'abréviation CMC) éventuellement sous forme de sels (par exemple, les carboxyméthylcelluloses de sodium, les carboxyméthylcelluloses d'ammonium), les latex de copolymère styrène-butadiène (connus sous l'appellation SBR), les polyacrylates, tels que les polyacrylates de lithium, les polyamides, les polyimides, les polyesters et les mélanges de ceux-ci.

Le matériau carboné conducteur électronique peut être un matériau comprenant du carbone à l'état élémentaire et, de préférence, sous forme divisée, tel que des particules sphériques, des plaquettes ou des fibres.

On peut citer, comme matériau carboné, du graphite ; des billes de mésocarbone ; des fibres de carbone; du noir de carbone, tel que du noir d'acétylène, du noir tunnel, du noir de fourneau, du noir de lampe, du noir d'anthracène, du noir de charbon, du noir de gaz, du noir thermique ; du graphène ; des nanotubes de carbone ; et des mélanges de ceux-ci.

Le matériau actif peut être présent, dans la première couche ou la deuxième couche, en un teneur allant de 50 à 99 % en masse par rapport à la masse totale des ingrédients de la première couche ou deuxième couche.

Le ou les liants organiques peuvent être présents en une teneur allant de 1 à 30% massique par rapport à la masse totale des ingrédients de la première ou deuxième couche.

Enfin, le cas échéant, le matériau carboné conducteur électronique peut être présent en une teneur allant de 1 à 20 % massique par rapport à la masse totale des ingrédients de première couche ou deuxième couche.

Chacune des couches comprenant un matériau actif (à savoir la première couche et la deuxième couche susmentionnées) peut présenter une épaisseur pouvant aller de 10 µm à 200 µm et peut présenter, par ailleurs, une largeur allant de 0,001 m à 1 m et une longueur allant de 0,01 m à 100 m.

Comme mentionné ci-dessus, la première couche est revêtue, sur l'une de ses faces, d'une couche composée d'un métal, dont les cations correspondants sont ceux intervenant dans le processus d'insertion ou désinsertion ionique et/ou dans le processus de formation d'alliage et de désalliage dans le matériau actif de la première couche.

Il s'entend que la face de la première couche, sur laquelle est déposée la couche composée d'un métal, n'est pas la face, qui sert de face de dépôt sur le collecteur de courant. En d'autres termes, la première couche peut être définie comme une première couche comprenant un matériau actif déposé, *via* une première face, sur une première face d'un collecteur de courant et étant revêtue sur une deuxième face par une couche composée d'un métal, dont les cations correspondants sont ceux intervenant dans le processus d'insertion ou désinsertion ionique et/ou dans le processus de formation d'alliage et de désalliage dans le matériau actif de la première couche et deuxième couche, ladite première face de la première couche et ladite deuxième face de la première couche étant opposées l'une à l'autre.

La couche composée d'un métal peut être, en particulier :
- une couche composée d'un métal alcalin, notamment, lorsque l'accumulateur, dans lequel est destinée à être incorporée l'électrode négative, est un accumulateur M¹-ion avec M¹ représentant un ion alcalin (tel que des ions lithium, lorsque l'accumulateur est un accumulateur lithium-ion, auquel cas la couche est en lithium métallique ; des ions sodium, lorsque l'accumulateur est un accumulateur sodium-ion, auquel cas la couche est en sodium métallique ; des ions potassium, lorsque l'accumulateur est un accumulateur potassium-ion, auquel cas la couche est en potassium métallique) ;
- une couche composée d'un métal alcalino-terreux, notamment lorsque l'accumulateur, dans lequel est destinée à être incorporée l'électrode négative, est un accumulateur M²-ion avec M² représentant un ion alcalino-terreux (tel que des ions magnésium, lorsque l'accumulateur est un accumulateur magnésium-ion, auquel cas la couche est en magnésium métallique ; des ions calcium, lorsque l'accumulateur est un accumulateur calcium-ion, auquel cas la couche est en calcium métallique).

Cette couche composée d'un métal peut se présenter sous forme d'un feuillard métallique présentant une épaisseur pouvant aller de 1 µm à 100 µm, par exemple, une épaisseur supérieure ou égale à 20 µm, par exemple, égale à 50 µm et peut présenter, par ailleurs, une largeur allant de 0,001 m à 1 m et une longueur allant de 0,01 m à 100 m.

En apposant une telle couche uniquement sur une des couches comprenant un matériau actif, il est possible de s'affranchir de l'utilisation de feuillard métallique trop fin (par exemple, un feuillard présentant une épaisseur inférieure à 50 µm) difficile à manipuler lors de la fabrication de l'électrode négative et, en revanche, d'utiliser un feuillard métallique d'épaisseur double (par exemple, présentant une épaisseur supérieure à 20 µm) du fait que la surépaisseur conférée à l'électrode négative par la présence de cette couche métallique ne s'applique que sur l'une des couches comprenant un matériau actif.

Le collecteur de courant disposé entre la première couche et la deuxième couche est un collecteur de courant muni de trous traversants reliant la première couche à la deuxième couche.

Il peut s'agir, en particulier, d'un collecteur muni de performations, lesquelles peuvent préexister avant l'apposition des couches sur le matériau actif. En particulier, il peut s'agir d'un collecteur de type grille, qui peut être disponible commercialement et qui peut avoir été fabriqué avant le dépôt des couches d'électrodes (par exemple, par une technique impliquant l'utilisation d'un laser) ou alors après dépôt des couches d'électrodes, ces dernières se retrouvant ainsi également perforées.

Le collecteur de courant peut se présenter sous forme d'une grille ou plaque trouée présentant une épaisseur allant de 5 µm à 100 µm, par exemple, de 10 µm et pouvant présenter, par ailleurs, lorsqu'il se présente sous forme rectangulaire, une longueur allant de 0,01 m à 100 m et une largeur allant de 0,001 m à 1 m.

Le collecteur de courant peut présenter une surface ouverte allant de 1 à 90% de la surface totale du collecteur.

Enfin, d'un point de vue constitutif, le collecteur de courant peut comprendre (voire être constitué d') un ou plusieurs métaux choisis parmi le cuivre, l'aluminium, le nickel et les alliages de ceux-ci. Il peut comprendre éventuellement des fibres de carbone.

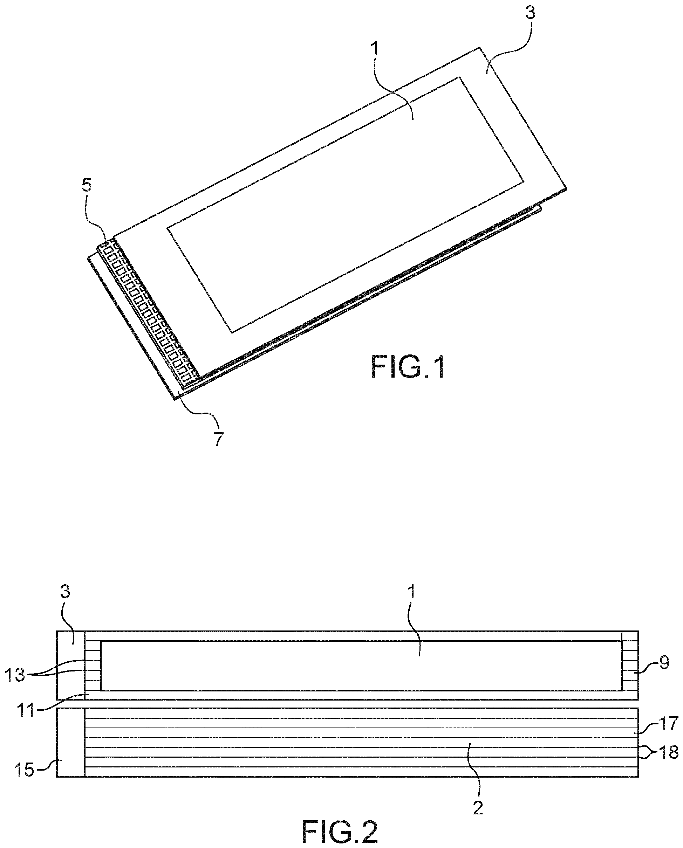

La figure 1 jointe en annexe illustre une électrode négative spécifique conforme à l'invention, représentée en vue éclatée, comprenant respectivement, un empilement comprenant la succession d'éléments suivants : la couche composée d'un métal 1, la première couche 3 comprenant un matériau actif, le collecteur de courant 5 du type grille, la deuxième couche 7 comprenant un matériau actif, les trous traversants 6 du collecteur de courant allant de la première couche à la deuxième couche.

La première couche peut être également pourvue de trous traversants, avantageusement, situés dans le prolongement de ceux du collecteur de courant, ce qui signifie, en d'autres termes, que les trous traversants de la première couche et ceux du collecteur du courant relient la couche composée de métal et la deuxième couche.

La deuxième couche peut être également pourvue de trous traversants, avantageusement, situés dans le prolongement de ceux du collecteur de courant.

Selon un mode particulier de l'invention, la première couche est pourvue de trous traversants situés dans le prolongement de ceux du collecteur de courant et la deuxième couche est également pourvue de trous traversants situés dans le prolongement de ceux du collecteur de courant, ce qui signifie, en d'autres termes, que les trous traversants traversent l'ensemble allant de la deuxième couche à la première couche.

La figure 2 jointe en annexe illustre une électrode négative répondant à ce mode particulier de l'invention, dont les deux faces opposées sont représentées, comprenant respectivement la couche composée de métal 9, la première couche 11 comprenant un matériau actif et munie de trous traversants 13, le collecteur de courant 15, la deuxième couche 17 comprenant un matériau actif et munie également de trous traversants 18.

L'électrode négative peut être préparée selon différents procédés.

Selon une première variante, les électrodes négatives peuvent être préparées selon un procédé comprenant les étapes suivantes :
a) une étape de dépôt sur un collecteur de courant muni de trous traversants d'une première couche comprenant un matériau actif sur une première face du collecteur de courant et d'une deuxième couche comprenant un matériau actif sur une deuxième face du collecteur de courant, ladite première face et ladite deuxième face étant opposées l'une à l'autre ;
b) une étape de dépôt sur la première couche comprenant le matériau actif d'une couche composée d'un métal, dont les cations correspondants sont ceux intervenant dans le processus d'insertion ou désinsertion ionique dans le matériau actif de la première couche et de la deuxième couche ou dans le processus de formation d'alliage et de désalliage dans le matériau actif de la première couche et de la deuxième couche.

L'étape de dépôt a) comporte ainsi deux phases : une opération de dépôt sur une première face du collecteur de courant de la première couche comprenant un matériau actif et une opération de dépôt sur une deuxième face du collecteur de courant de la deuxième couche comprenant un matériau actif.

Plus spécifiquement, chaque opération de dépôt peut consister à déposer une composition liquide, plus spécifiquement, une composition rhéofluidifiante (pouvant être qualifiée d'encre) comprenant les ingrédients constitutifs des couches concernées (en particulier, le matériau actif, éventuellement, un liant organique et éventuellement un matériau carboné conducteur électronique), la composition liquide, plus spécifiquement rhéofluidifiante, étant avantageusement identique pour la première couche et la deuxième couche, dès lors que la première couche et la deuxième couche sont identiques.

Ces opérations de dépôt peuvent être effectuées par des techniques de dépôt classiques, telles que de la pulvérisation, du trempage-retrait, de l'enduction.

Après chaque opération de dépôt, il peut être prévu un séchage de la couche ainsi déposée.

L'étape de dépôt b) sur la première couche comprenant le matériau actif d'une couche composée d'un métal peut consister à mettre en contact, par exemple, un feuillard composé dudit métal et à réaliser un co-laminage pour assurer une bonne adhérence entre la couche composée d'un métal avec la première couche. Pour ce faire, l'ensemble formé de la première couche et la deuxième couche disposées de part et d'autre du collecteur de courant et de la couche composée d'un métal peut être passé dans un dispositif comprenant deux rouleaux permettant d'accéder à une adhérence suffisante.

Selon une deuxième variante, les électrodes négatives peuvent être préparées selon un procédé comprenant les étapes suivantes :
c) une étape de dépôt d'une première couche comprenant un matériau actif sur une première face d'un collecteur de courant plein et d'une deuxième couche comprenant un matériau actif sur une deuxième face du collecteur de courant, ladite première face et ladite deuxième face étant opposées l'une à l'autre ;
d) une étape d'application d'un perforateur sur l'ensemble issu de l'étape a), pour former le collecteur muni de trous traversants ;
e) une étape de dépôt sur la première couche comprenant le matériau actif d'une couche composée d'un métal, dont les cations correspondants sont ceux intervenant dans le processus d'insertion ou désinsertion ionique dans le matériau actif de la première couche et de la deuxième couche ou dans le processus de formation d'alliage et de désalliage dans le matériau actif de la première couche et de la deuxième couche.

Les modalités décrites pour l'étape a) ci-dessus sont également valables pour l'étape c) susmentionnée, mis à part que dans l'étape c), le collecteur de courant est un collecteur de courant plein.

L'étape d) peut être réalisée à l'aide d'un perforateur du type dispositif comportant un rouleau à pointes, et plus spécifiquement, à micropointes, lequel rouleau est déplacé à la surface de la première couche en appliquant une pression sur le rouleau, de sorte à ce que les pointes présentes sur le rouleau transpercent l'ensemble formé des deux couches et du collecteur de courant plein pour générer des trous traversants allant de la première couche à la deuxième couche.

Les modalités décrites pour l'étape b) ci-dessus sont également valables pour l'étape e) susmentionnée, si ce n'est, qu'en plus, la présence de trous traversant sur la première couche permettant une amélioration de l'adhérence de la couche composée de métal.

Le procédé défini dans cette deuxième variante est adapté à la préparation d'électrodes négatives conformes à l'invention, dont les trous traversants vont de la première couche à la deuxième couche en passant par le collecteur de courant.

Les électrodes négatives de l'invention peuvent être introduites telles quelles dans un accumulateur ou peuvent être introduites dans celui-ci sous une forme activée, c'est-à-dire une forme sous laquelle le métal présent dans la couche a subi une corrosion et les ions formés lors de cette diffusion ont diffusé à la fois dans l'épaisseur de la première couche et l'épaisseur de la deuxième couche, cette diffusion dans l'épaisseur de la deuxième couche étant rendue possible par la présence du collecteur comportant des trous traversants.

Ainsi, l'invention a trait à un procédé d'activation d'une électrode négative telle que définie ci-dessus comprenant une étape de mise en contact de l'électrode négative avec un électrolyte pendant une durée et une température fixées pour engendrer la corrosion du métal de la couche composée d'un métal en cations métalliques (par exemple, en cations Li⁺ lorsque la couche est constituée de lithium, en cations Na⁺ lorsque la couche est constituée de sodium, en cations K⁺, lorsque la couche est constituée de potassium).

Selon une première variante, cette étape de mise en contact peut être effectuée en plaçant ladite électrode dans un sachet comprenant la composition électrolytique, ce sachet pouvant être un sachet souple ou rigide fermé de façon hermétique (par exemple, un sachet thermoscellé) puis en plaçant le sachet comprenant la composition électrolytique dans une étuve. Concomitamment, à cette étape de mise en contact, il peut être appliqué une pression sur l'électrode négative pour générer une contrainte mécanique qui va permettre une meilleure diffusion des ions métalliques issus de la corrosion d'une couche constituée du métal.

L'électrolyte peut être, en particulier, un électrolyte liquide comprenant un sel métallique dissous dans au moins un solvant organique, tel qu'un solvant apolaire aprotique, le sel métallique comprenant, plus spécifiquement, un cation métallique étant de nature identique aux cations métalliques issus de la corrosion de la couche constitué d'un métal.

Le sel métallique peut être notamment un sel de lithium, lorsque la couche composée d'un métal est une couche en lithium.

A titre d'exemples de sel de lithium, on peut citer LiClO₄, LiAsF₆, LiPF₆, LiBF₄, LiRfSO₃, LiCH₃SO₃, LiN(RfSO₂)₂, Rf étant choisi parmi F ou un groupe perfluoroalkyle comportant de 1 à 8 atomes de carbone, du trifluorométhanesulfonylimidure de lithium (connu sous l'abréviation LiTFSI), du bis(oxalato)borate de lithium (connu sous l'abréviation LiBOB), du bis(perfluoréthylsulfonyl)imidure de lithium (également connu sous l'abréviation LiBETI), du fluoroalkylphosphate de lithium (connu sous l'abréviation LiFAP).

A titre d'exemples de solvants organiques susceptibles d'entrer dans la constitution de l'électrolyte, on peut citer les solvants carbonates, tels que les solvants carbonates cycliques, les solvants carbonates linéaires et les mélanges de ceux-ci.

A titre d'exemples de solvants carbonates cycliques, on peut citer le carbonate d'éthylène (symbolisé par l'abréviation EC), le carbone de propylène (symbolisé par l'abréviation PC).

A titre d'exemples de solvants carbonates linéaires, on peut citer le carbonate de diéthyle (symbolisé par l'abréviation DEC), le carbonate de diméthyle (symbolisé par l'abréviation DMC), le carbonate d'éthylméthyle (symbolisé par l'abréviation EMC).

Selon une deuxième variante, l'étape de mise en contact peut être réalisée par les opérations suivantes :
- une opération de placement de l'électrode négative dans un dispositif du type accumulateur;
- une opération de mise en contact de l'accumulateur avec un électrolyte pendant une durée et une température fixées pour engendrer la corrosion du métal de la couche composée d'un métal en cations métalliques (par exemple, en cations Li⁺ lorsque la couche est constituée de lithium, en cations Na⁺ lorsque la couche est constituée de sodium, en cations K⁺, lorsque la couche est constituée de potassium).

L'opération de placement de l'électrode négative dans un dispositif du type accumulateur peut consister à préparer un accumulateur, dans lequel l'électrode négative de l'invention est partagée entre une première cellule et une deuxième cellule, ladite première cellule comprenant respectivement, une électrode positive, un séparateur électrolytique et la première couche comprenant un matériau actif revêtue de la couche composée d'un métal, ledit séparateur électrolytique étant disposé en sandwich entre l'électrode positive et la couche composée de métal et la deuxième cellule comprenant, respectivement, une électrode positive, un séparateur électrolytique et la deuxième couche comprenant un matériau actif, ledit séparateur électrolytique étant disposé en sandwich entre l'électrode positive et la deuxième couche comprenant un matériau actif.

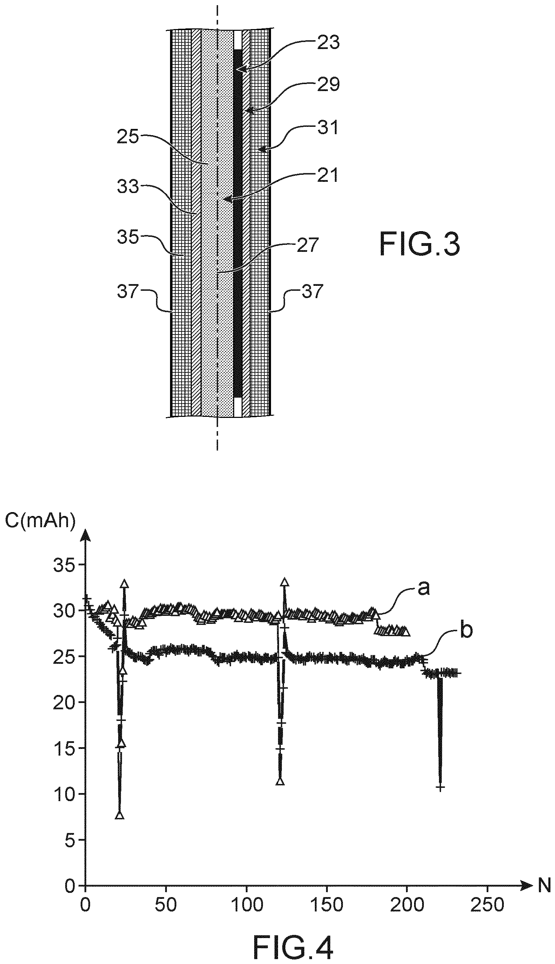

Cette préparation d'accumulateur peut être effectuée par empilement respectif d'un premier séparateur électrolytique sur la couche composée d'un métal et d'une électrode positive sur le premier séparateur électrolytique puis d'un deuxième séparateur électrolytique sur la deuxième couche comprenant un matériau actif et d'une électrode positive sur le deuxième séparateur électrolytique, l'accumulateur résultant étant représenté sur la figure 3 jointe en annexe comprenant :
- l'électrode négative 20 comprenant une première couche 21 comprenant un matériau actif revêtue d'une couche composée d'un métal 23 et une deuxième couche 25 comprenant un matériau actif et un collecteur de courant 27 muni de trous traversants ;
- un premier séparateur électrolytique 29 déposé sur la couche composée d'un métal ;
- une électrode positive 31 déposée sur le premier séparateur électrolytique 29 ;
- un deuxième séparateur électrolytique 33 déposé sur la deuxième couche 25 ; et
- une électrode positive 35 déposée sur le deuxième séparateur électrolytique 33 ;
chaque électrode positive étant associée à un collecteur de courant 37, par exemple du type feuillard métallique en aluminium.

L'accumulateur ci-dessus mentionné est un accumulateur planaire. Il est possible également d'envisager un accumulateur présentant les mêmes éléments que ceux mentionnés, ces différents éléments étant ensuite enroulés pour former un accumulateur bobiné cylindrique.

L'opération de mise en contact avec un électrolyte peut se dérouler de manière similaire à celle décrite pour le cas de figure où l'opération de mise en contact se déroule directement avec une électrode négative non placée dans un accumulateur.

A l'issue du procédé mentionné ci-dessus, que ce soit pour la première variante ou la deuxième variante, la couche composée d'un métal est une couche corrodée, dont tout ou partie du métal a été transformé en ions métalliques qui ont diffusé dans la première couche et dans la deuxième couche *via* le collecteur de courant muni de trous traversants.

Enfin, l'invention a trait à un accumulateur fonctionnant selon le principe de l'insertion-désinsertion ionique ou selon le processus de formation d'alliage et de désalliage comprenant une électrode négative telle que définie ci-dessus ou une électrode négative obtenue à l'issue du procédé d'activation défini ci-dessus, laquelle comprend, à la place de la couche composée d'un métal, une couche corrodée, dont tout ou partie du métal a été transformé en ions métalliques qui ont diffusé dans la première couche et dans la deuxième couche *via* le collecteur de courant muni de trous traversants.

Plus spécifiquement, l'accumulateur comprend une première cellule et une deuxième cellule séparées l'une de l'autre par le collecteur de courant de l'électrode négative, ladite première cellule comprenant une électrode positive, un premier séparateur électrolytique et la première couche comprenant un matériau actif revêtue de la couche composée d'un métal de l'électrode négative, le premier séparateur électrolytique étant disposé en sandwich entre l'électrode positive et la couche composée de métal et ladite deuxième cellule comprenant une électrode positive, un séparateur électrolytique et la deuxième couche comprenant un matériau actif de l'électrode négative, ledit séparateur électrolytique étant disposé en sandwich entre l'électrode positive et la deuxième couche comprenant un matériau actif.

En variante, lorsque l'électrode négative utilisée dans l'accumulateur est l'électrode obtenue à l'issue du procédé d'activation, l'accumulateur peut comprendre une première cellule et une deuxième cellule séparées l'une de l'autre par le collecteur de courant de l'électrode négative, ladite première cellule comprenant une électrode positive, un premier séparateur électrolytique et la première couche comprenant un matériau actif revêtue de la couche composée d'un métal de l'électrode négative, le premier séparateur électrolytique étant disposé en sandwich entre l'électrode positive et la couche composée de métal et ladite deuxième cellule comprenant une électrode positive, un deuxième séparateur électrolytique et la deuxième couche comprenant un matériau actif de l'électrode négative, ledit deuxième séparateur électrolytique étant disposé en sandwich entre l'électrode positive et la deuxième couche comprenant un matériau actif.

On précise que, par électrode positive, on entend, classiquement, dans ce qui précède et ce qui suit, l'électrode qui fait office de cathode, quand le générateur débite du courant (c'est-à-dire lorsqu'il est en processus de décharge) et qui fait office d'anode lorsque le générateur est en processus de charge.

L'électrode positive comprend, classiquement, un matériau actif, c'est-à-dire un matériau apte à intervenir dans les réactions d'insertion et de désinsertion se produisant lors du fonctionnement de l'accumulateur (lorsque celui-ci fonctionne selon le principe d'insertion et désinsertion ionique) ou dans les réactions de formation d'alliage et de désalliage (lorsque l'accumulateur est un accumulateur fonctionnant selon le principe de la formation d'alliage et de désalliage).

Lorsque l'accumulateur est un accumulateur du type M¹-ion (M¹ étant un ion alcalin, tel que Li, Na, K), le matériau actif de l'électrode peut être un matériau du type oxyde de M¹ comprenant au moins un élément métallique de transition et/ou de post-transition, du type phosphate de M¹ comprenant au moins un élément métallique de transition, du type silicate de M¹ comprenant au moins un élément métallique de transition ou du type borate de M¹ comprenant au moins un élément métallique de transition.

Comme exemples de composés oxydes de M¹ comprenant au moins un élément métallique de transition et/ou de post-transition, on peut citer des oxydes simples ou des oxydes mixtes (c'est-à-dire des oxydes comprenant plusieurs éléments métalliques de transition et/ou de post-transition distincts) comprenant au moins un élément métallique de transition et/ou de post-transition, tels que des oxydes comprenant du nickel, du cobalt, du manganèse et/ou de l'aluminium (ces oxydes pouvant être des oxydes mixtes).

Plus spécifiquement, comme oxydes mixtes comprenant du nickel, du cobalt, du manganèse et/ou de l'aluminium, on peut citer les composés de formule suivante :

M¹M'O₂

dans laquelle M' est un élément choisi parmi Ni, Co, Mn, Al et les mélanges de ceux-ci et M¹ est un élément alcalin.

A titre d'exemples de tels oxydes, on peut citer les oxydes lithiés LiCoO₂, LiNiO₂ et les oxydes mixtes Li(Ni,Co,Mn)O₂ (tel que Li(Ni_{1/3}Mn_{1/3}Co_{1/3})O₂ ou Li(Ni_{0,6}Mn_{0,2}Co_{0,2})O₂ (connu également sous la dénomination NMC), Li(Ni,Co,Al)O₂ (tel que Li(Ni_{0,8}Co_{0,15}Al_{0,05})O₂ connu également sous la dénomination NCA) ou Li(Ni,Co,Mn,Al)O₂, les oxydes dits riches en lithium Li₁₊ₓ(Ni,Co,Mn)O₂, x étant supérieur à 0.

A titre d'exemples de tels oxydes, on peut citer les oxydes sodés NaCoO₂, NaNiO₂ et les oxydes mixtes Na(Ni,Co,Mn)O₂ (tel que Na(Ni_{1/3}Mn_{1/3}Co_{1/3})O₂), Na(Ni,Co,Al)O₂ (tel que Na(Ni_{0,8}CO_{0,15}Al_{0,05})O₂) ou Na(Ni,Co,Mn,Al)O₂.

Comme exemples de composés phosphates de M¹ comprenant au moins un élément métallique de transition, on peut citer les composés de formule M¹M^{"}PO₄, dans laquelle M^{"} est choisi parmi Fe, Mn, Ni, Co et les mélanges de ceux-ci et M¹ est un élément alcalin, tel que LiFePO₄.

Comme exemples de composés silicates de M¹ comprenant au moins un élément métallique de transition, on peut citer les composés de formule M¹₂M^{"'}SiO₄, dans laquelle M'" est choisi parmi Fe, Mn, Co et les mélanges de ceux-ci et M¹ est un élément alcalin.

Comme exemples de composés borates lithiés comprenant au moins un élément métallique de transition, on peut citer les composés de formule M¹M^{"'}BO₃, dans laquelle M'" est choisi parmi Fe, Mn, Co et les mélanges de ceux-ci et M¹ est un élément alcalin.

Lorsque l'accumulateur est un accumulateur du type M²-ion (M² étant un ion alcalino-terreux), le matériau actif de l'électrode peut être MoS₆.

En outre, l'électrode positive peut comprendre également au moins un liant organique tel qu'un liant polymérique, comme du polyfluorure de vinylidène (PVDF), un mélange carboxyméthylcellulose avec un latex du type styrène et/ou acrylique ainsi qu'au moins un additif conducteur de l'électricité, qui peut être des matériaux carbonés, comme du noir de carbone. Qui plus est, l'électrode positive peut se présenter, d'un point de vue structural, comme un matériau composite comprenant une matrice en liant(s) organique(s) au sein de laquelle sont dispersées des charges constituées par le matériau actif (se présentant, par exemple, sous forme particulaire) et éventuellement le ou les additifs conducteurs de l'électricité.

Le séparateur électrolytique est classiquement une membrane polymérique poreuse imprégnée d'un électrolyte, tel qu'un électrolyte liquide tel que défini ci-dessus.

Les accumulateurs de l'invention peuvent adopter une architecture planaire ou une architecture bobinée ou spiralée.

D'autres caractéristiques et avantages de l'invention apparaîtront du complément de description qui suit et qui se rapporte à des modes de réalisation particuliers.

Bien entendu, ce complément de description n'est donné qu'à titre d'illustration de l'invention et n'en constitue en aucun cas une limitation.

### BRÈVE DESCRIPTION DES DESSINS

La figure 1, nommée en annexe [Fig. 1] et déjà commentée, illustre une électrode négative spécifique conforme à l'invention et représentée en vue éclatée.
La figure 2, nommée en annexe [Fig. 2] et déjà commentée, illustre une électrode négative conforme à un mode particulier de réalisation de l'invention.
La figure 3, nommée en annexe [Fig. 3] et déjà commentée, illustre un accumulateur conforme à l'invention.
La figure 4, nommée en annexe [Fig. 4], est un graphique représentant l'évolution de la capacité déchargée C (en mAh) en fonction du nombre de cycles N, la courbe a) illustrant la courbe relative à un accumulateur conforme à l'invention et la courbe b) illustrant la courbe relative à un accumulateur non conforme à l'invention.

### EXPOSÉ DÉTAILLÉ DE MODES DE RÉALISATION PARTICULIERS

### EXEMPLE

Cet exemple illustre un accumulateur conforme à l'invention tel que représenté en coupe sur la figure 3 déjà définie ci-dessus, cet accumulateur répondant, plus spécifiquement aux spécificités suivantes :
- les électrodes positives sont composées d'un matériau composite comprenant un matériau actif du type NMC (à hauteur de 92% massique), un additif conducteur électronique noir de carbone Super P à hauteur de 4% massique et un liant du type polyfluorure de vinylidène (PVDF) à hauteur de 4% massique, les électrodes positives présentant une épaisseur de 65 µm et étant associés à un collecteur de courant du type feuillard en aluminium présentant une épaisseur de 20 µm et une surface de 10,2 cm² ;
- les séparateurs sont des séparateurs polymériques du type Celgard® présentant une épaisseur de 20 µm et une porosité de 40%, ces séparateurs présentant également une forme carrée de 40 mm de côté ;
- pour l'électrode négative, la première couche et la deuxième couche sont composées d'un matériau composite comprenant un matériau actif consistant en un composite graphite-silicium (à hauteur de 92% massique), un additif conducteur électronique noir de carbone Super P à hauteur de 2% massique et un liant du type polymère acrylique à hauteur de 6% massique ;
- la couche composée d'un métal est un feuillard de lithium de dimensions 27 mm^{∗}27 mm et présentant une épaisseur de 50 µm ;
- le collecteur de courant est un feuillard de cuivre présentant une épaisseur de 10 µm ;
l'électrode négative étant munie de trous traversants allant de la première couche à la deuxième couche et passant par le collecteur de courant, les trous présentant un diamètre de 0,25 mm et étant répartis selon une densité de 60 trous/cm², l'ensemble formé des deux couches, du feuillard de lithium et du collecteur de courant présentant une épaisseur de 100 µm et une surface de 12,25 cm².

En parallèle, il est mis en place, dans cet exemple, un accumulateur non conforme à l'invention répondant aux mêmes spécificités que celles énoncées ci-dessus au sujet de l'accumulateur conforme à l'invention, si ce n'est que l'électrode négative n'est pas pourvue de trous traversants et que son collecteur de courant est un collecteur plein (c'est-à-dire également non muni de trous traversants).

Chacun des accumulateurs est placé dans un sachet souple rempli d'électrolyte comprenant du LiPF₆ (1M) et un mélange de carbonate d'éthylméthyle (EMC) et du carbonate de fluoroéthylène (selon une proportion 70/30) et du carbonate de vinylène (VC) à hauteur de 2% massique. Chaque sachet respectif est thermoscellé en laissant dépasser une connectique positive et une connectique négative reliées électriquement par soudure ultrasons aux électrodes.

Les sachets sont ensuite placés 4 jours dans une étuve, dont la température est fixée à 40°C sous contrainte mécanique par le biais de plaques supports apposées sur les sachets de sorte à appliquer une pression de part et d'autre de l'accumulateur contenu dans le sachet, ce traitement permettant d'obtenir une corrosion de la couche composée de lithium et une diffusion des ions lithium dans toute l'épaisseur de l'électrode négative.

A l'issue de ces 4 jours, l'accumulateur conforme à l'invention et l'accumulateur non conforme à l'invention sont soumis à un cycle de formation à C/10 puis à un test de cyclage à C/2 pendant plus de 200 cycles.

Les résultats du cycle de formation sont regroupés dans le tableau suivant :

**[Table 1]**

| Accumulateur | Capacité chargée (en mAh) | Capacité déchargée (en mAh) | Taux d'irréversibilité (en %) |
|---|---|---|---|
| Conforme à l'invention | 46 | 41 | 11 |
| Non conforme à l'invention | 46 | 38 | 17 |

Il ressort que l'accumulateur conforme à l'invention présente un taux d'irréversibilité moindre que l'accumulateur non conforme à l'invention, ce qui atteste de l'amélioration apportée par la présence des trous traversants notamment au niveau du collecteur de courant.

Les résultats du test de cyclage à C/2 sont représentés sur la figure 4 jointe en annexe, qui illustre un graphique représentant l'évolution de la capacité déchargée C (en mAh) en fonction du nombre de cycles N, la courbe a) illustrant la courbe relative à l'accumulateur conforme à l'invention et la courbe b) illustrant la courbe relative à l'accumulateur non conforme à l'invention.

Il ressort que l'accumulateur conforme à l'invention présente une meilleure cyclabilité, ce qui atteste également que la diffusion du lithium issue de la corrosion de la couche composée de lithium est homogène dans toute l'épaisseur de l'électrode négative.

## Revendications

1. Electrode négative pour accumulateur fonctionnant selon le principe d'insertion et désinsertion ionique et/ou selon le principe de formation d'un alliage et de désalliage, ladite électrode négative comprenant :
- une première couche (3) comprenant un matériau actif déposé, *via* une de ses faces, sur une première face d'un collecteur de courant (5) ;
- une deuxième couche (7) comprenant un matériau actif déposé, *via* une de ses faces, sur une deuxième face d'un collecteur de courant (5), ladite première face étant opposée à ladite deuxième face ;
**caractérisée en ce que** le collecteur de courant (5) est muni de trous traversants (6) reliant la première couche à la deuxième couche et **en ce que** la première couche est revêtue d'une couche composée d'un métal (1), dont les cations correspondants sont ceux intervenant dans le processus d'insertion ou désinsertion ionique et/ou dans le processus de formation d'alliage et de désalliage dans le matériau actif de la première couche et de la deuxième couche.

2. Electrode négative selon la revendication 1, dans laquelle le matériau actif, que ce soit pour la première couche et/ou la deuxième couche, est choisi parmi :
- le silicium ;
- un matériau carboné, tel que du carbone dur, du graphite naturel ou du graphite artificiel ; et
- des mélanges de ceux-ci .

3. Electrode négative la revendication 1, dans laquelle le matériau actif, que ce soit pour la première couche et/ou la deuxième couche, est de l'étain.

4. Electrode négative selon l'une quelconque des revendications précédentes, dans laquelle la couche composée d'un métal (1) est une couche composée d'un métal alcalin ou une couche composée d'un métal alcalino-terreux.

5. Electrode négative selon l'une quelconque des revendications précédentes, dans laquelle la couche composée d'un métal (1) se présente sous forme d'un feuillard métallique.

6. Electrode négative selon l'une quelconque des revendications précédentes, dans laquelle la couche composée d'un métal (1) présente une épaisseur supérieure ou égale à 20 µm.

7. Electrode négative selon l'une quelconque des revendications précédentes, dans lequel le collecteur de courant (5) comprend un ou plusieurs métaux choisis parmi le cuivre, l'aluminium, le nickel et les alliages de ceux-ci.

8. Electrode négative selon l'une quelconque des revendications précédentes, dans laquelle la première couche (3) est pourvue de trous traversants situés dans le prolongement de ceux du collecteur de courant.

9. Electrode négative selon l'une quelconque des revendications précédentes, dans laquelle la deuxième couche (7) est pourvue de trous traversants situés dans le prolongement de ceux du collecteur de courant.

10. Procédé de préparation d'une électrode négative telle que définie à la revendication 1, comprenant les étapes suivantes :
a) une étape de dépôt sur un collecteur de courant muni de trous traversants d'une première couche comprenant un matériau actif sur une première face du collecteur de courant et d'une deuxième couche comprenant un matériau actif sur une deuxième face du collecteur de courant, ladite première face et ladite deuxième face étant opposées l'une à l'autre ;
b) une étape de dépôt sur la première couche comprenant le matériau actif d'une couche composée d'un métal, dont les cations correspondants sont ceux intervenant dans le processus d'insertion ou désinsertion ionique dans le matériau actif de la première couche et de la deuxième couche ou dans le processus de formation d'alliage et de désalliage dans le matériau actif de la première couche et de la deuxième couche.

11. Procédé de préparation d'une électrode négative telle que définie à la revendication 1, comprenant les étapes suivantes :
c) une étape de dépôt sur un collecteur de courant d'une première couche comprenant un matériau actif sur une première face d'un collecteur de courant plein et d'une deuxième couche comprenant un matériau actif sur une deuxième face du collecteur de courant, ladite première face et ladite deuxième face étant opposées l'une à l'autre ;
d) une étape d'application d'un perforateur sur l'ensemble issu de l'étape a), pour former le collecteur muni de trous traversants ;
e) une étape de dépôt sur la première couche comprenant le matériau actif d'une couche composée d'un métal, dont les cations correspondants sont ceux intervenant dans le processus d'insertion ou désinsertion ionique dans le matériau actif de la première couche et de la deuxième couche ou dans le processus de formation d'alliage et de désalliage dans le matériau actif de la première couche et de la deuxième couche.

12. Procédé d'activation d'une électrode négative telle que définie selon la revendication 1, comprenant une étape de mise en contact de l'électrode négative avec un électrolyte pendant une durée et une température fixées pour engendrer la corrosion du métal de la couche composée d'un métal en cations métalliques.

13. Accumulateur fonctionnant selon le principe de l'insertion-désinsertion ionique ou selon le processus de formation d'alliage et de désalliage comprenant une électrode négative telle que définie selon l'une quelconque des revendications 1 à 9 ou une électrode négative obtenue à l'issue du procédé d'activation défini à la revendication 12.

14. Accumulateur selon la revendication 13, qui comprend une première cellule et une deuxième cellule séparées l'une de l'autre par le collecteur de courant (27) de l'électrode négative, ladite première cellule comprenant une électrode positive (31), un premier séparateur électrolytique (29) et la première couche (21) comprenant un matériau actif revêtue de la couche composée d'un métal (23) de l'électrode négative (20), le premier séparateur électrolytique (29) étant disposé en sandwich entre l'électrode positive (31) et la couche composée de métal (23) et ladite deuxième cellule comprenant une électrode positive (35), un deuxième séparateur électrolytique (33) et la deuxième couche (25) comprenant un matériau actif de l'électrode négative (20), ledit deuxième séparateur électrolytique (33) étant disposé en sandwich entre l'électrode positive (31) et la deuxième couche (25) comprenant un matériau actif.
